Europäisches Patentamt

European Patent Office

Office européen des brevets

(11) Publication number: **0 083 134**
**A1**

## (12) EUROPEAN PATENT APPLICATION

(21) Application number: 82201625.9

(22) Date of filing: 20.12.82

(51) Int. Cl.³: **G 11 B 5/27**
//G11B5/60

(30) Priority: 30.12.81 US 335900

(43) Date of publication of application:
06.07.83 Bulletin 83/27

(84) Designated Contracting States:
DE FR GB

(71) Applicant: North American Philips Corporation
100 East 42nd Street 9th Floor
New York, N.Y. 10017(US)

(72) Inventor: Tanka, David Michael
c/o INT. OCTROOIBUREAU B.V. Prof. Holstlaan 6
NL-5656 AA Eindhoven(NL)

(74) Representative: Koppen, Jan et al,
INTERNATIONAAL OCTROOIBUREAU B.V. Prof.
Holstlaan 6
NL-5656 AA Eindhoven(NL)

(54) Recording head assembly with side track erasure.

(57) A magnetic recording head assembly with side track erasure includes two core halves defining a read/write gap between them; a first erase core being disposed in spaced generally inclined relationship to one side of the read/write core halves and a second erase core being disposed on the other side of the read/write core halves also in spaced, generally inclined relationship. A face of the erase cores and a face of the read/write cores are disposed in substantially coplanar relationship. Channels are provided which extend through the said face of each of the erase cores and which are generally parallel to a side of the read/write core halves. The channels may be disposed with the erase cores intermediate the read/write cores and the channels.

FIG.1

FIG.3

Croydon Printing Company Ltd

## Recording head assembly with side track erasure.

The invention relates to magnetic recording head assemblies with side track erasure and particularly to so-called straddle erase heads. While the invention has primary application to straddle erase heads it will be understood to also have application to tunnel erase heads.

Straddle erase heads are used in floppy disc drives. Such heads are designed to erase along the sides of a track to which digital data is being written. One of the reasons for such constructions is that there is a certain finite tolerance on the location of any given track. During successive writing cycles the position of the track on the floppy disc may vary. Any residual data on the track after a given writing cycle would inherently conflict with the data which was being written most recently. The straddle erase head ensures that any tolerance on the positioning of the track will not result in residual data being left on the track since the marginal areas of the writing track will be erased and thus no extraneous data will remain on the floppy disc.

The manufacture of such straddle erase heads has, in general, been an extremely painstaking process involving a high rate of scrappage because of the necessity of extremely precise positioning of the cores which produce the erasing action. Errors in the positioning of the erase cores may result in residual data being left on the floppy disc or erasure of data which is intended to be saved.

It is an object of the invention to provide a recording head assembly with side track erasure which has extremely small erase track widths and tight tolerances.

It is another object of the invention to provide apparatus which achieves these structural characteristics while permitting the use of relatively large and inexpensive erase cores with loose tolerances that would otherwise be unacceptable to achieve the desired characteristics.

It has now been found. that these and other objects of the invention may be obtained by a recording head assembly of the type described above which includes two core halves defining a read/write gap between them; a first erase core being disposed in spaced generally inclined relationship to one side of the read/write core halves and a second erase core being disposed on the other side of the read/write core halves also in spaced, generally inclined relationship, a face of the erase cores and a face of the read/write core halves being disposed in substantially coplanar relationship, wherein channels extend through the said face of each of the erase cores, said channels being generally parallel to a side of the read/write core halves.

In some forms of the invention the channels may be positioned with an exposed tip of each erase core intermediate the read/write core halves and one of the channels.

An embodiment of the invention will be described by way of example, with reference to the drawing.

Figure 1 is a perspective view of a portion of a straddle erase recording head in accordance with the invention;

Figure 2 is a plan view of a portion of the magnetic head illustrated in Figure 1; and

Figure 3 is a sectional view taken along the line 3-3 of Figure 2.

DESCRIPTION OF THE PREFERRED EMBODIMENT

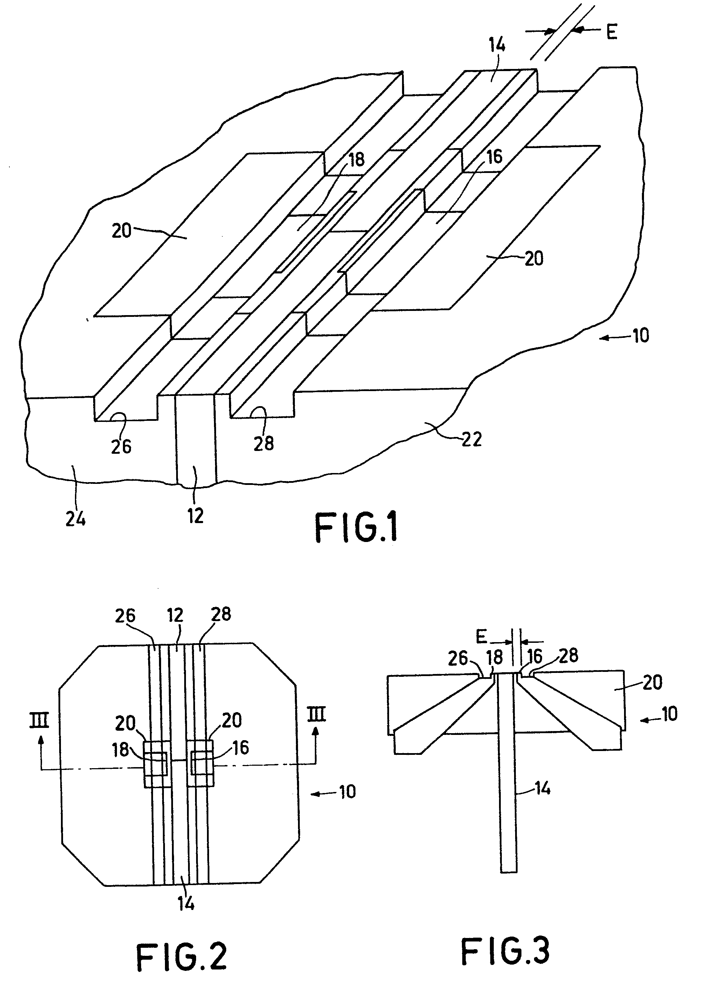

Referring now to Figures 1-3 there is shown a straddle erase recording head assembly 10 in accordance with the invention. The head includes read/write core halves 12, 14 which are commonly bonded together in accordance with the method described in Peloschek et al, United States Patent 3,246,383. The core halves 12, 14 will typically be manufactured of a ferrite. Disposed on each side of the read/write core halves 12, 14 are erase cores 16, 18. It will be seen in Figures 1 and 3 that the faces of the erase cores 16, 18 are coplanar with each other as well as with the face of the read/write core halves 12, 14. The erase cores 16, 18, as best seen in Figure 3, may extend generally away from the sides of the read/write cores 12, 14. Although not illustrated the lower extremities of the erase cores 16, 18 will ordinarily be joined by a mu metal strap which will have a plurality of winding turns around it. Power applied to the winding turns will produce the desired erasing action. Potting glass 20 will ordinarily mount the erase cores 16, 18 to the read/write cores 12, 14 and also to outriggers 22, 24.

The erase cores will ordinarily be joined to the read/write cores by means of a glass bonding process such as that described in Peloschek et al, United States Patent 3,246,383. This process involves the use of shims placed intermediate the members to be bonded and the use of capillary action to flow molten glass intermediate the members to permanently secure them. The glass is preferred over epoxy constructions in that it minimizes creep and other dimensional changes which would adversely affect the characteristics of the head.

It will be understood that the erasing action is achieved by magnetic flux passing through the strap (not shown) which forms a magnetic flux path between the erase cores 16, 18, through erase core 16, across the gap intermediate the read/write core halves 12, 14, and erase core 16, through the read/write core halves 12, 14, across the gap between the read/write core halves 12, 14 and erase core 18 and back through erase core 18. As best seen in Figures 1 and 3 the effective erase track width, identified by the letter E is the sum of the distance intermediate the erase head 16 or 18 and the read/write core halves 12, 14 and the width of the exposed tip of the erase core. (It will be understood that the sides of the read/write core halves 12, 14 are coplanar).

The difficulty in manufacturing the prior art (straddle) erase recording head assemblies is that the cumulative tolerance on the positioning of the erase cores with respect to the read/write core halves plus the tolerance on the sides of the upper axial extremity or tip of the erase cores is difficult to control. Since the erase cores are ordinarily manufactured in a separate manufacturing process apart from the glass bonding process which attaches the erase cores to the read/write core halves it is difficult to anticipate the precise effective erase track when fabricating a recording head assembly with side track erasure.

The invention solves this problem by utilizing a grinding wheel to produce channels 26, 28. These channels 26, 28 may be precisely positioned to adjust the total dimension E to any predetermined value. Advantageously the dimension E may be adjusted to compensate for a tolerance in the space intermediate the read/write core halves 12, 14 and the erase cores 16 or 18 as well as the physical dimension of the tip of the erase core 16 or 18. This makes possible the use of relatively inexpensive (loose tolerance) erase cores which would not ordinarily be acceptable. In addition the final product produced by the method in accordance with the invention has extreme precision which is not possible with other manufacturing techniques. An additional benefit is that the channel 26, 28 may have beneficial aerodynamic properties in the control of the magnetic head.

CLAIMS :

1.        A magnetic recording head assembly with side track erasure which comprises :
        two core halves defining a read/write gap between them; a first erase core being disposed in generally spaced inclined relationship to one side of the read/write core halves and a second erase core being disposed on the other side of the read/write core halves also in spaced, generally inclined relationship, a face of the erase cores and a face of the read/write core halves being disposed in substantially coplanar relationship; wherein channels extend through the said face of each of said erase cores, said channels being generally parallel to a side of the read/write core halves.

2.        An assembly as claimed in claim 1, wherein the channels are positioned with an exposed tip of each erase core intermediate the read/write core halves and one of the channels.

0083134

1/1

FIG.1

FIG.2

FIG.3

PHA 21096

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 160 315 (TANDON et al.) *Column 1, lines 28-39 and line 65 - column 2, line 19; column 5, lines 48-50; column 6, lines 1-19,43-44 and 56-61; column 7, lines 7-17,34-40 and 47-54; column 8, lines 1-8; figures 6,8,9,10,11* | 1 | G 11 B 5/27 // G 11 B 5/60 |
| P,X | PATENTS ABSTRACTS OF JAPAN, vol. 6, no. 104(P-122)[982], 15th June 1982; & JP - A - 57 36 424 (HITACHI KINZOKU K.K.) (27-02-1982) *Abstract* | 1,2 | |
| A | US-A-3 922 776 (ALGER et al.) *Column 1, lines 23-26; column 2, lines 5-25; column 3, lines 7-11,26-35 and 58 - column 4, line 6, lines 17-18,25-29 and 37-40; figures 1,2,3,4,5,6* | 1,2 | TECHNICAL FIELDS SEARCHED (Int. Cl. ³)  G 11 B |
| A | FR-A-2 027 169 (CONTROL DATA CORP.) *Page 4, lines 16-29; page 5, lines 3-20; figures 1,2,3* | 1,2 | |

--- -/-

The present search report has been drawn up for all claims

| Place of search THE HAGUE | Date of completion of the search 28-03-1983 | Examiner FUX J. |
|---|---|---|

European Patent Office

**EUROPEAN SEARCH REPORT**

EP 82 20 1625

| | **DOCUMENTS CONSIDERED TO BE RELEVANT** | | Page 2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | PATENTS ABSTRACTS OF JAPAN, vol. 4, no. 18, 13th February 1980, page 76 E 171; & JP - A - 54 158 210 (HITACHI SEISAKUSHO K.K.) (13-12-1979) *Abstract* | 1 | |
| A | US-A-3 810 244 (HASEGAWA) *Column 7, lines 6-26; figure 7* | 1,2 | |
| A | US-A-3 514 851 (PERKINS et al.) | 1 | |

TECHNICAL FIELDS SEARCHED (Int. Cl. ³)

The present search report has been drawn up for all claims

| Place of search THE HAGUE | Date of completion of the search 28-03-1983 | Examiner FUX J. |
|---|---|---|

EPO Form 1503 03.82